# EUROPEAN PATENT APPLICATION

(11) **EP 4 589 212 A1**
(43) Date of publication of application: **23.07.2025**
(21) Application number: 23865279.6
(22) Date of filing: 29.08.2023
(51) Int. Cl.: F24F 13/15, B60H 1/34

(54) **STRUCTURE**

(30) Priority: 12.09.2022 JP 2022144249
(71) Applicant: Nature Architects Inc., Tokyo 103-0011 (JP)
(72) Inventor: SUTO Kai, Tokyo 103-0011 (JP)
(74) Representative: Kuhnen & Wacker Patent- und Rechtsanwaltsbüro PartG mbB
(86) International application number: PCT/JP2023/031355
(87) International publication number: WO 2024/057923

(57) **Abstract**

A structure includes multiple fin sections arranged in a predetermined direction, with an adjustable gap between two adjacent fin sections. Each fin section is formed in a band shape and is elastically deformable. The structure includes a first support section rotatable around a first pivot axis, a second support section rotatable around a second pivot axis, multiple first connecting sections, each connecting the first support section to one end of the multiple fin sections, and each being bendably deformable, and multiple second connecting sections, each connecting the second support section to the other end of the multiple fin sections, and each being bendably deformable. The first and second connecting sections, which are pairs with respect to the fin sections, are formed such that they move away from the first and second pivot axes, respectively as they extend from one side to the other in the predetermined direction.

## Description

### Technical Field

This disclosure relates to a structure.

### Background

Conventionally, a grill-type air outlet has been proposed, which includes a frame-shaped grill, multiple fixed fin sections integrally formed with the front of the grill, each having a parallel horizontal plate shape, and multiple movable fin sections located behind the fixed fin sections, each having a vertical plate shape and being parallel to one another (see Patent Document 1). In this configuration, each movable fin section is rotatably supported on the upper and lower surfaces of the grill by an axis integrally formed at the central upper and lower ends of the fin sections. The movable fin sections are connected to a connecting section via an arm, which is integrally formed on the same side, allowing for rotation. At approximately the center of the connecting member, a knob is integrally formed, which protrudes forward (toward the interior of the vehicle) between the two central fixed fin sections. This configuration allows the operation of the knob to cause adjacent movable fin sections to contact each other, thereby closing the air outlet.

### Citation List

### Patent Literature

PTL 1: Japanese Utility Model Registration No.2524468

### Summary

In the air outlet described in Patent Document 1, each movable fin section, the grill, and the connecting member must be separately formed, with the movable fin sections being rotatably supported on the grill. Additionally, each movable fin section must be rotatably connected to a connecting member arranged such that a knob protrudes forward between the two fixed fin sections. As a result, the number of parts increases, and the assembly becomes complicated.

A main object of the present disclosure is to provide a structure that allows for changing the gap (open area) between two adjacent fin sections in a row of multiple fin sections, with a simpler configuration.

In order to achieve the above main object, the present disclosure employs the following configuration.

A structure according to the present disclosure is a structure including multiple fin sections arranged in a predetermined direction, and is capable of changing a gap between two adjacent fin sections. Each of the multiple fin sections is formed in a band shape and is elastically deformable. The structure further includes a first support section rotatable around a first pivot axis, a second support section rotatable around a second pivot axis, multiple first connecting sections, each connecting the first support section to one end of the multiple fin sections, and each being bendably deformable, and multiple second connecting sections, each connecting the second support section to the other end of the multiple fin sections, and each being bendably deformable. The first and second connecting sections, which are pairs with respect to the fin sections, are formed such that they move away from the first and second pivot axes, respectively as they extend from one side to the other side in the predetermined direction. When the first and second support sections rotate in predetermined opposite directions around the first and second pivot axes, starting from a use base shape in which the multiple fin sections are curved on one side relative to a predetermined plane that includes the first and second pivot axes, the multiple first and second connecting sections bend toward a direction where the first and second support sections and the multiple fin sections approach each other, causing out-of-plane deformation due to elastic deformation in the multiple fin sections, leading the multiple fin sections to tilt toward the other side in the predetermined direction, thereby increasing the gap between the two adjacent fin sections.

In the structure according to the present disclosure, when the first and second support sections rotate in the predetermined opposite directions around the first and second pivot axes, starting from the use base shape in which the multiple fin sections are curved on one side relative to the predetermined plane that includes the first and second pivot axes, the multiple first and second connecting sections bend toward the direction where the first and second support sections and the multiple fin sections approach each other. Since the distance between the first and second pivot axes and the pair of first and second connecting sections, relative to the fin sections, is longer on the other side than on one side in the predetermined direction, when each pair of the first and second connecting sections bends, it causes out-of-plane deformation due to elastic deformation in each of the fin sections, leading the multiple fin sections to tilt toward the other side in the predetermined direction. The one side and the other side in the predetermined direction may be the same for all of the fin sections (for example, the same for the front and rear sides of all of the fin sections), or they may be different between some of the fin sections and the remaining fin sections (for example, the front and rear sides for some of the fin sections, and the rear and front sides for the remaining fin sections). When the multiple fin sections tilt toward the other side in the predetermined direction, the gap between two adjacent fin sections (the opening area) increases. That is, by rotating the first and second support sections from the use base shape, the gap (opening area) between two adjacent fin sections can be changed. Additionally, since the first and second support sections and the multiple fin sections are connected via multiple first and second connecting sections, the structure allows for a simpler configuration, specifically making it easy to reduce the number of parts and eliminate complicated assembly, thereby enabling changes in the gap (opening area) between two adjacent fin sections. The rotation of the first and second support sections may be performed either manually or automatically (driven by a power source).

### Brief Description of Drawings

Fig. 1 is a perspective view of a structure 20.
Fig. 2 is a top view of the structure 20.
Fig. 3 is a perspective view of the structure 20 in its use base shape.
Fig. 4 is a top view of the structure 20 in its use base shape.
Fig. 5 is a perspective view of the structure 20 when the fin sections 22 of the structure 20 undergo elastic deformation from the use base shape.
Fig. 6 is a top view of the structure 20 when the fin sections 22 of the structure 20 undergo elastic deformation from the use base shape.
Fig. 7 is a perspective view of a structure 20A.
Fig. 8 is a perspective view of a structure 20B.
Fig. 9 is a top view of a structure 120.
Fig. 10 is a perspective view of the structure 120 in its use base shape.
Fig. 11 is a perspective view of the structure 120 when the fin sections 22 of the structure 120 undergo elastic deformation from the use base shape.
Fig. 12 is a top view of the fin sections 22 of the structure 120 when the fin sections 22 of the structure 120 undergo elastic deformation from the use base shape.
Fig. 13 is a top view of a structure 220.
Fig. 14 is a perspective view of the structure 220 in its use base shape.
Fig. 15 is a perspective view of the structure 220 when the fin sections 22 of the structure 220 undergo elastic deformation from the use base shape.
Fig. 16 is a top view of the structure 220 when the fin sections 22 of the structure 220 undergo elastic deformation from the use base shape.
Fig. 17 is a perspective view of a structure 320.
Fig. 18 is a perspective view of a structure 420.
Fig. 19 is a diagram showing two-color molding process for the structure 420.

### Description of Embodiments

The following describes some aspects of the present disclosure with reference to embodiments.

### [Embodiment 1]

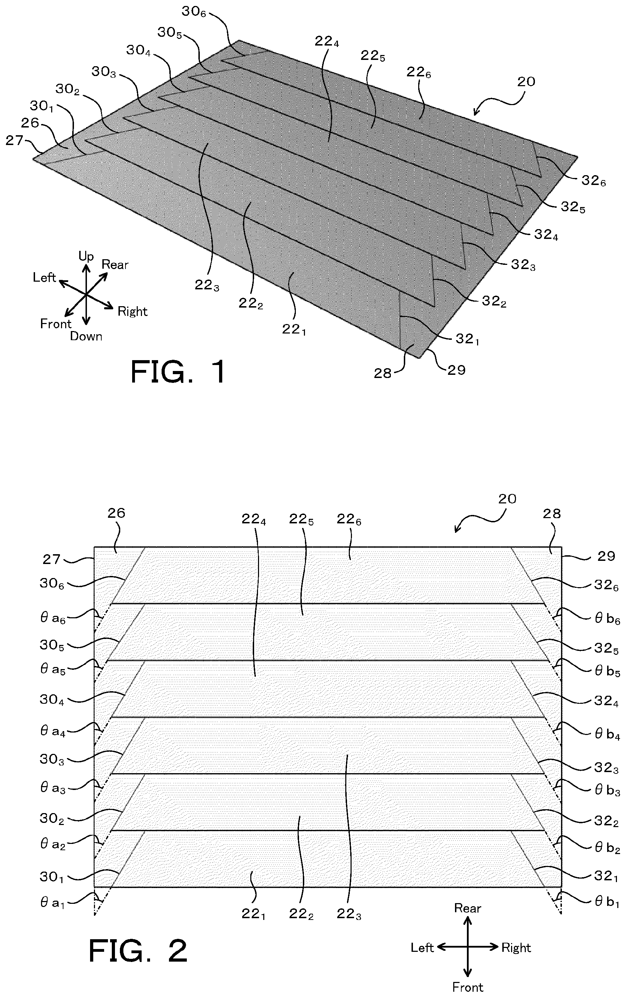

Figs. 1 and 2 are perspective and top views of a structure 20 according to an embodiment of the present disclosure. The left-right direction, front-rear direction, and up-down direction of the structure 20 are as shown in Figs. 1 and 2. Of course, the orientation of the arrangement of the structure 20 is not limited to this configuration. The structure 20 according to the embodiment is an integrally molded product, and for example, it may be integrally molded by injection molding, blow molding, extrusion molding, or 3D printing of resin or rubber materials, or it may be integrally molded by casting, forging, pressing, cutting, extrusion molding, or 3D printing of metal materials.

As shown in Figs. 1 and 2, the structure 20 is formed in a rectangular plate shape as a whole, and includes six fin sections 22[1] to 22[6], a pair of first and second support sections 26 and 28, and six pairs of first and second connecting sections 30[1] to 30[6] and 32[1] to 32[6]. The numbers in square brackets in the specification are assigned in order from the front side to the rear side of the structure 20, corresponding to the subscripts (lower numbers) in Fig. 1. In the following description, the square brackets and the numbers within them for the fin sections 22[1] to 22[6], first and second connecting sections 30[1] to 30[6], 32[1] to 32[6], and others may be omitted, and they may be referred to simply as the fin sections 22, first and second connecting sections 30, 32, etc.

The fin sections 22[1] to 22[6] are each formed in a band shape extending along the left-right direction, and are elastically deformable. The fin sections 22[1] to 22[6] are arranged in a single row in the front-rear direction. The first support section 26 is located to the left of the fin sections 22[1] to 22[6]. This first support section 26 is rotatably supported around the first pivot axis 27, which extends along the front-rear direction at the left end of the structure 20 (first support section 26). The second support section 28 is located to the right of the fin sections 22[1] to 22[6]. This second support section 28 is rotatably supported around the second pivot axis 29, which extends along the front-rear direction at the right end of the structure 20 (second support section 28). The first and second pivot axes 27 and 29 are spaced apart in the left-right direction and extend parallel to each other along the front-rear direction. The rotation of the first and second support sections 26 and 28 may be performed either manually or automatically (driven by a motor or other power source).

The first connecting sections 30[1] to 30[6] each connect the first support section 26 to the left ends of the fin sections 22[1] to 22[6] in the left-right direction. The first connecting sections 30[1] to 30[6] are capable of bending deformation, forming a valley fold when viewed from above. Specifically, the first connecting sections 30[1] to 30[6] are capable of bending deformation such that the first support section 26 and the left ends of the fin sections 22[1] to 22[6] move closer to each other from above. The first connecting sections 30[1] to 30[6] are each formed such that they gradually move away from the first pivot axis 27 as they extend from the front side to the rear side.

The second connecting sections 32[1] to 32[6] each connect the second support section 28 to the right ends of the fin sections 22[1] to 22[6] in the left-right direction. The second connecting sections 32[1] to 32[6] are capable of bending deformation, forming a valley fold when viewed from above. Specifically, the second connecting sections 32[1] to 32[6] are capable of bending deformation such that the second support section 28 and the right ends of the fin sections 22[1] to 22[6] move closer to each other from above. The second connecting sections 32[1] to 32[6] are each formed such that they gradually move away from the second pivot axis 29 as they extend from the front side to the rear side.

In the embodiment, the acute angles θa[1] to θa[6] between the extending direction of the first pivot axis 27 and the extending direction of the first connecting sections 30[1] to 30[6], as well as the acute angles θb[1] to θb[6] between the extending direction of the second pivot axis 29 and the extending direction of the second connecting sections 32[1] to 32[6], are all identical. Therefore, the fin sections 22[1] to 22[6] each form an isosceles trapezoid.

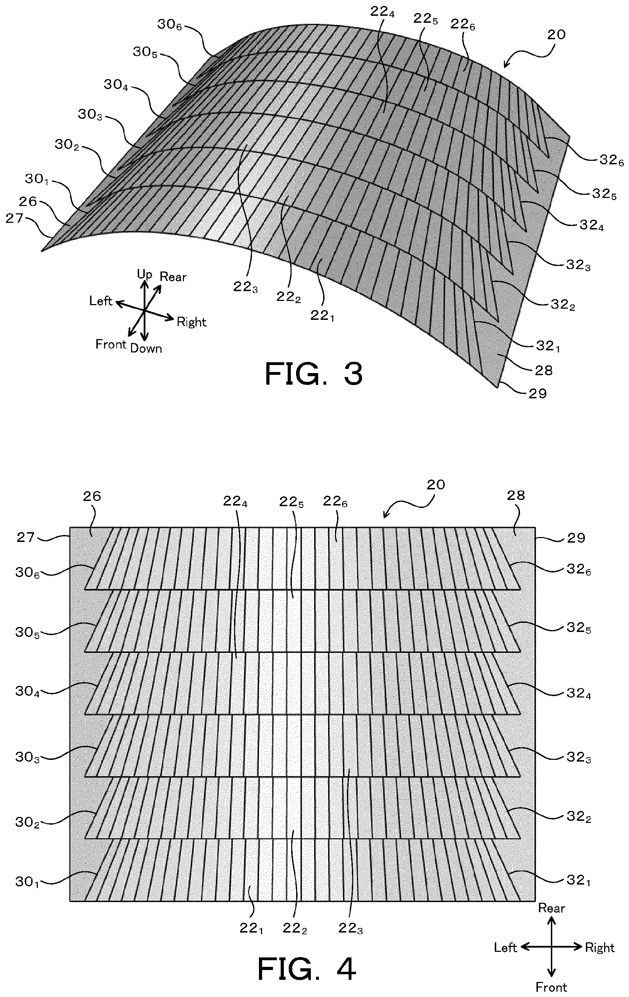

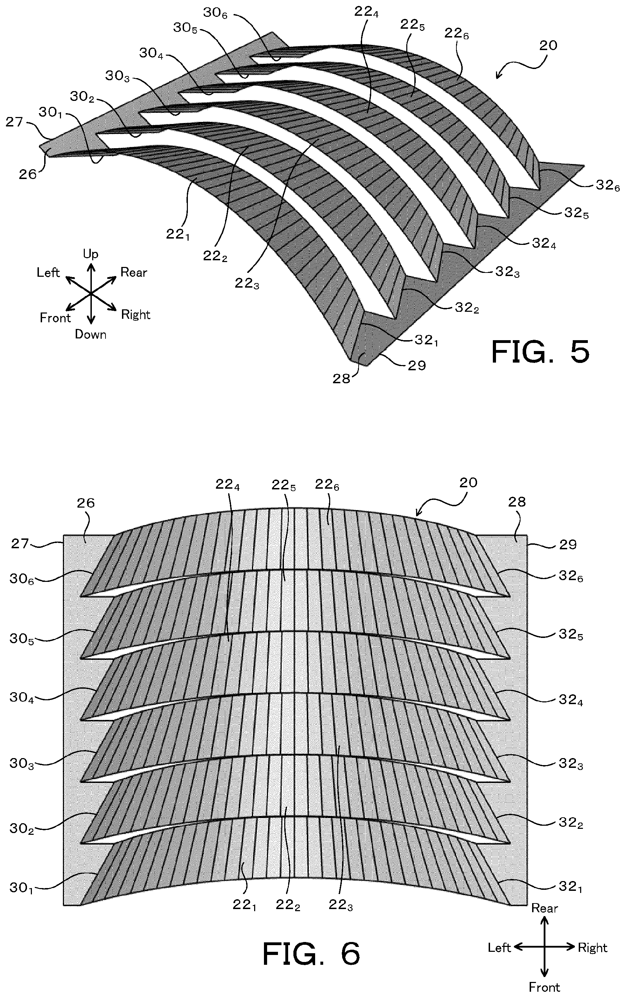

The following describes the pre-deformation process of the structure 20 and the change process in the gap (open area) between two adjacent fin sections 22. Figs. 3 and 4 are perspective and top views of the structure 20 in its use base shape, while Figs. 5 and 6 are perspective and top views of the structure 20 when the fin sections 22 of the structure 20 undergo elastic deformation from the use base shape. In Figs. 3 to 6, ridge lines are shown for clarity.

The following describes the pre-deformation process of the structure 20. In the pre-deformation process, the structure 20 is deformed from its completed manufacturing shape to the use base shape. The completed manufacturing shape is a flat plate shape as shown in Figs. 1 and 2, while the use base shape is a convex curved shape on the upper side relative to a predetermined plane (a plane extending along the front-rear and left-right directions) that includes the first and second pivot axes 27 and 29 as shown in Figs. 3 and 4. In its use base shape, the structure 20 is, for example, installed on a dashboard as an automotive air vent.

The following describes the change process in the gap (open area) between two adjacent fin sections 22 of the structure 20. For the structure 20, when the first and second support sections 26 and 28 are rotated around the first and second pivot axes 27 and 29 in a clockwise and counterclockwise direction from the front side of Fig. 3, starting from the use base shape shown in Figs. 3 and 4, the first and second connecting sections 30[1] to 30[6] and 32[1] to 32[6] undergo bending deformation, forming a valley fold when viewed from above. Specifically, the first and second connecting sections 30[1] to 30[6] and 32[1] to 32[6] undergo bending deformation such that the first and second support sections 26 and 28 and the left and right ends of the fin sections 22[1] to 22[6] move closer to each other from above. As described above, the rotation of the first and second support sections 26 and 28 may be performed either manually or automatically (driven by a motor or other power source). In the structure 20, the distance between the first and second pivot axes 27 and 29 and the first and second connecting sections 30[1] to 30[6] and 32[1] to 32[6] is longer at the rear side compared to the front side. Therefore, when the first and second connecting sections 30[1] to 30[6] and 32[1] to 32[6] undergo bending deformation, as shown in Figs. 5 and 6, out-of-plane deformation due to elastic deformation occurs in the fin sections 22[1] to 22[6], causing the fin sections 22[1] to 22[6] to tilt toward the rear side. Also, in the structure 20, the angles θa[1] to θa[6] and θb[1] to θb[6] described above are all identical. Therefore, the fin sections 22[1] to 22[6] each tilt toward the rear side by approximately the same amount. When the fin sections 22[1] to 22[6] tilt toward the rear side, the gap between two adjacent fin sections 22 (the opening area) becomes larger. That is, in the structure 20, by rotating the first and second support sections 26 and 28 from the use base shape, it is possible to change the gap (opening area) between two adjacent fin sections 22. Moreover, in the embodiment, the structure 20 is an integrally molded product in which the first and second support sections 26 and 28 and the fin sections 22[1] to 22[6] are connected through the first and second connecting sections 30[1] to 30[6] and 32[1] to 32[6]. Therefore, the number of parts is reduced, and complicated assembly steps are eliminated.

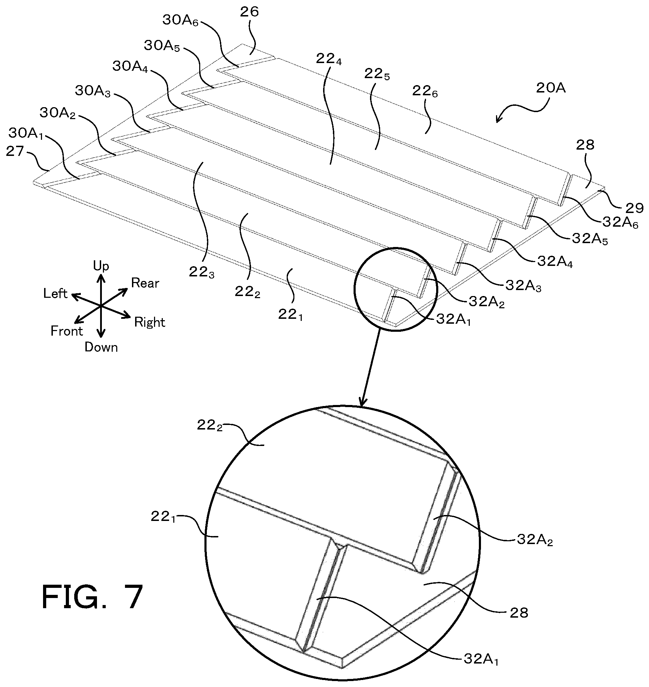

Here, examples of the shapes of the first and second connecting sections 30 and 32 will be described using structures 20A and 20B. Fig 7 is a perspective view of the structure 20A. As shown in Fig. 7, in the structure 20A, first and second connecting sections 30A[1] to 30A[6] and 32A[1] to 32A[6] are each formed such that they gradually move away from the first and second pivot axes 27 and 29 as they extend from the front side to the rear side, while forming a V-shaped concave profile (V-shaped when viewed in the extending direction) that slopes from the upper surface to the lower surface. By forming the first and second connecting sections 30A[1] to 30A[6] and 32A[1] to 32A[6] in this way, the bending stiffness related to bending deformation, which forms a valley fold when viewed from above, can be reduced compared to the first and second support sections 26 and 28.

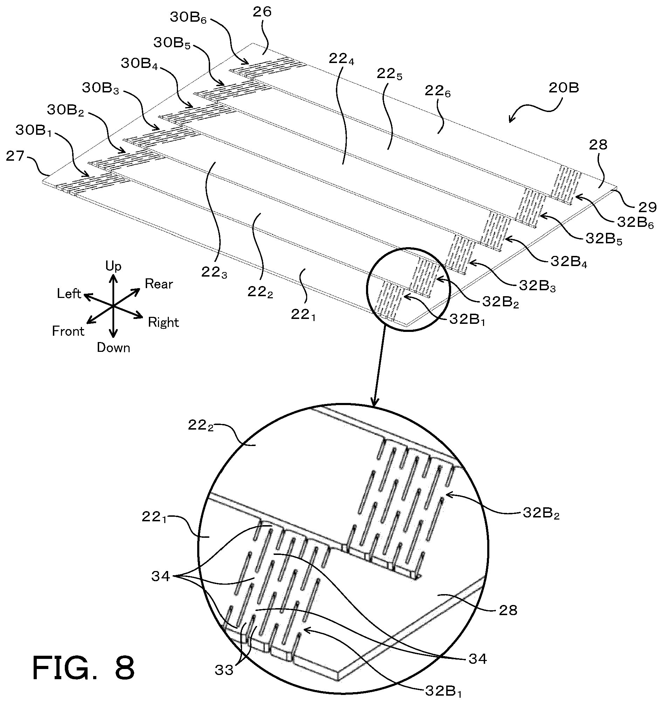

Fig. 8 is a perspective view of the structure 20B. As shown in Fig. 8, in the structure 20B, first and second connecting sections 30B[1] to 30B[6] and 32B[1] to 32B[6] are each formed such that they gradually move away from the first and second pivot axes 27 and 29 as they extend from the front side to the rear side. Each of the first and second connecting sections 30B and 32B includes multiple beam sections 33 and multiple bridging sections 34. The multiple beam sections 33 each extend from the front side to the rear side, moving away from the first and second pivot axes 27 and 29, and are spaced apart in the left-right direction between them. The multiple bridging sections 34 each extend along the left-right direction and connect one of the following: the first or second support sections 26 or 28 to the beam section 33, two adjacent beam sections 33, or the beam section 33 to the fin section 22.

Specifically, each of the multiple beam sections 33 is connected at first positions in the extending direction of the beam section 33, via the bridging sections 34, to the first or second support sections 26 or 28, or to the adjacent beam section 33 on the side of the first or second support sections 26 or 28. Additionally, each of the multiple beam sections 33 is also connected at second positions, which differ from the first positions in the extending direction of the beam sections 33, via the bridging sections 34, to the fin sections 22 or to the adjacent beam section 33 on the side of the fin sections 22. In the example shown in Fig. 8, the first positions correspond to one of either three or two locations. The three locations are the front end, the rear end, and the center in the extending direction of the beam sections 33. The two locations are the front-side intermediate (between the front end and the center), and the rear-side intermediate (between the rear end and the center) in the extending direction of the beam sections 33. The second positions correspond to the other of these three or two locations.

In the structure 20B, by forming the first and second connecting sections 30B[1] to 30B[6] and 32B[1] to 32B[6] in this way, the bending stiffness related to bending deformation, which forms a valley fold when viewed from above, can be reduced compared to the first and second support sections 26 and 28. During this bending deformation, due to the bending and twisting of each beam section 33, the length in the connecting direction between the first and second support sections 26 and 28 and the ends of the fin sections 22 via the first and second connecting sections 30B and 32B is prevented from decreasing on the upper side of each of the first and second connecting sections 30B and 32B, while the length in the connecting direction is prevented from increasing on the lower side.

Each of the first and second connecting sections 30B and 32B may include a single beam section 33 instead of the multiple beam sections 33 shown in Fig. 8. Alternatively, each of the first and second connecting sections 30B and 32B may be formed such that, instead of the shape shown in Fig. 8, which includes the beam sections 33 and the bridging sections 34, a plate- shaped section is combined with the upper and/or lower surfaces of the shape shown in Fig. 8, resulting in the entire structure being formed as a plate shape. The thickness of the plate-shaped section is preferably no greater than about 1/5, 1/8, or 1/10 of the thickness of the entire structure 20B (i.e., the first and second support sections 26 and 28), for example.

In the structure 20 according to the embodiment described above, the six fin sections 22[1] to 22[6] are each formed in a band shape extending along the left-right direction and are elastically deformable. The pair of first and second support sections 26 and 28 are each rotatable around the first and second pivot axes 27 and 29, respectively. The six pairs of first and second connecting sections 30[1] to 30[6] and 32[1] to 32[6] connect the first and second support sections 26 and 28 to the left and right ends of the fin sections 22[1] to 22[6], and are capable of bending deformation. Furthermore, for each of the fin sections 22 [i] (i: 1 to 6), the paired first and second connecting sections 30[i] and 32[i] are formed such that they move away from the first and second pivot axes 27 and 29 as they extend from the front side to the rear side. By this configuration, the gap (open area) between two adjacent fin sections 22 can be adjusted by the rotation of the first and second support sections 26 and 28 from the use base shape. Moreover, by making structure 20 an integrally molded product in which the first and second support sections 26 and 28 and the fin sections 22[1] to 22[6] are connected via the first and second connecting sections 30[1] to 30[6] and 32[1] to 32[6], the number of parts can be reduced and complicated assembly steps eliminated.

In the structure 20 according to the embodiment, the first and second connecting sections 30[1] to 30[6] and 32[1] to 32[6] are formed such that the angles θa[1] to θa[6] and θb[1] to θb[6] described above are all identical. However, this is not limited to the above, and they may be formed such that at least some of the angles θa[1] to θa[6] and θb[1] to θb[6] differ. Even in this case, it is preferable that the paired first and second connecting sections 30[i] and 32[i] for each fin section 22[i] (i: 1 to 6) are formed such that the angles θa[i] and θb[i] are the same as each other.

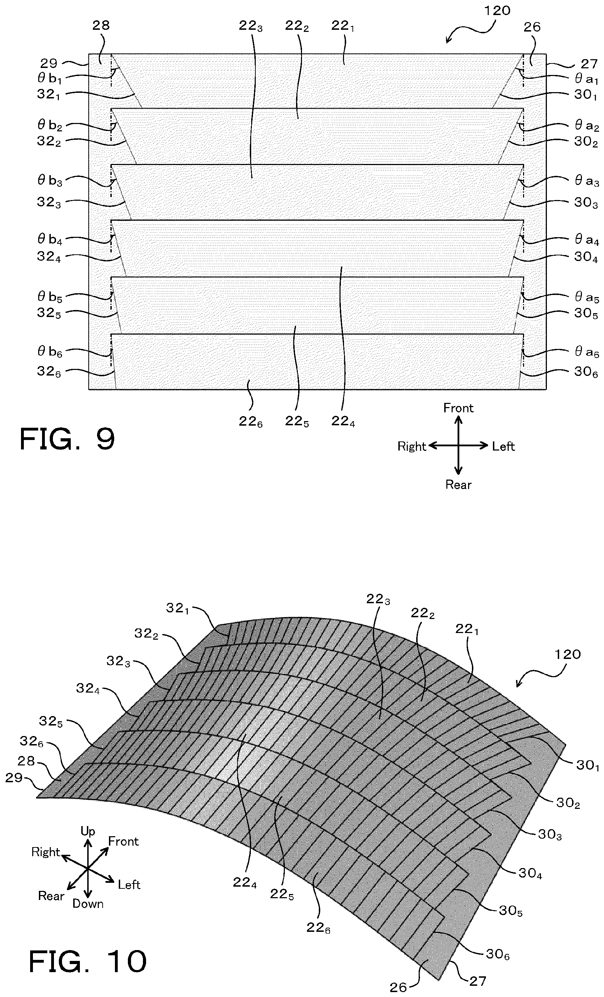

Fig. 9 is a top view of a structure 120 according to a modification. The left-right direction, front-back direction, and up-down direction of the structure 120 are as shown in Fig. 9. Of course, the orientation of the arrangement of the structure 120 is not limited to this configuration. As shown in Fig. 9, the structure 120 differs from the structure 20 in that, for the first and second connecting sections 30[i] and 32[i] (i: 1 to 6), the angles θa[i] and θb[i] gradually decrease as "i" increases.

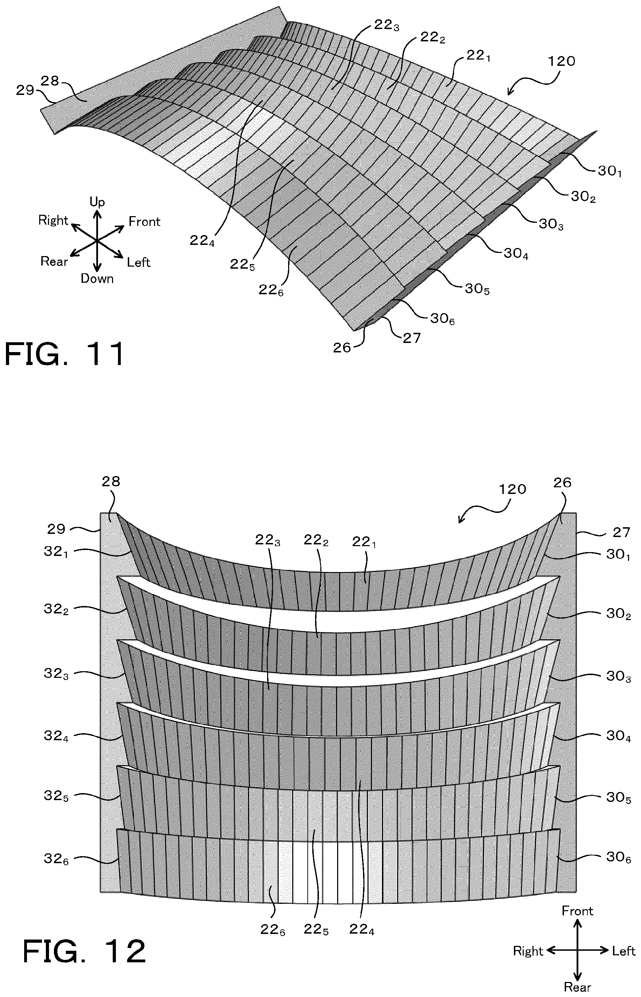

The following describes the pre-deformation process of the structure 120 and the change process in the gap (open area) between two adjacent fin sections 22. Fig. 10 is a perspective view of the structure 120 in its use base shape, while Figs. 11 and 12 are perspective and top views of the structure 120 when the fin sections 22 of the structure 120 undergo elastic deformation from the use base shape. In Figs. 10 to 12, ridge lines are shown for clarity.

In the pre-deformation process, the structure 120 is deformed from its completed manufacturing shape (the state shown in Fig. 9) to the use base shape (the state shown in Fig. 10). Here, the completed manufacturing shape and the use base shape of structure 120 are similar to the completed manufacturing shape (the states shown in Figs. 1 and 2) and the use base shape (the states shown in Figs. 3 and 4) of the structure 20.

For the structure 120, when the first and second support sections 26 and 28 are rotated around the first and second pivot axes 27 and 29 in a clockwise and counterclockwise direction from the front side of Fig. 10, starting from the use base shape, the first and second connecting sections 30[1] to 30[6] and 32[1] to 32[6] undergo bending deformation, forming a valley fold when viewed from above. In the structure 120, similarly to the structure 20, the distance between the first and second pivot axes 27 and 29 and the first and second connecting sections 30[1] to 30[6] and 32[1] to 32[6] is longer at the rear side compared to the front side. Therefore, when the first and second connecting sections 30[1] to 30[6] and 32[1] to 32[6] undergo bending deformation, as shown in Figs. 11 and 12, out-of-plane deformation due to elastic deformation occurs in the fin sections 22[1] to 22[6], causing the fin sections 22[1] to 22[6] to tilt toward the rear side. Furthermore, in the structure 120, the angles θa[i] and θb[i] described above gradually decrease as "i" increases. Therefore, when the first and second support sections 26 and 28 are rotated by a certain amount, the degree to which the fin sections 22[i] tilt toward the rear side decreases as "i" increases. As a result, the gap (open area) between two adjacent fin sections 22 gradually decreases in the following order: the gap between the fin sections 22[1] and 22[2], ..., and the gap between the fin sections 22[5] and 22[6]. That is, in the structure 120, when the first and second support sections 26 and 28 are rotated by a certain amount, the gap (open area) between two adjacent fin sections 22 can be made different for each pair, such as between the fin sections 22[1] and 22[2], ..., and between the fin sections 22[5] and 22[6].

In the structure 120 according to the modification, the first and second connecting sections 30[i] and 32[i] (i: 1 to 6) are formed such that the angles θa[i] and θb[i] gradually decrease as "i" increases. However, this is not limited to the above, and they may be formed such that the angles θa[i] and θb[i] are the same for at least two consecutive values of "i". For example, for "i" from 4 to 6, they may be formed such that the angles θa[i] and θb[i] gradually decrease as "i" increases, while for "i" from 1 to 3, the angles θa[i] and θb[i] are the same and greater than the angles θa[4] and θb[4].

In the structures 20 and 120 according to the embodiment and modification, the six pairs of first and second connecting sections 30[1] to 30[6] and 32[1] to 32[6] are formed such that they gradually move away from the first and second pivot axes 27 and 29 as they extend from the front side to the rear side. However, this is not limited to the above, and some of the six pairs of first and second connecting sections 30[1] to 30[6] and 32[1] to 32[6] may be formed such that they approach the first and second pivot axes 27 and 29 as they extend from the front side to the rear side.

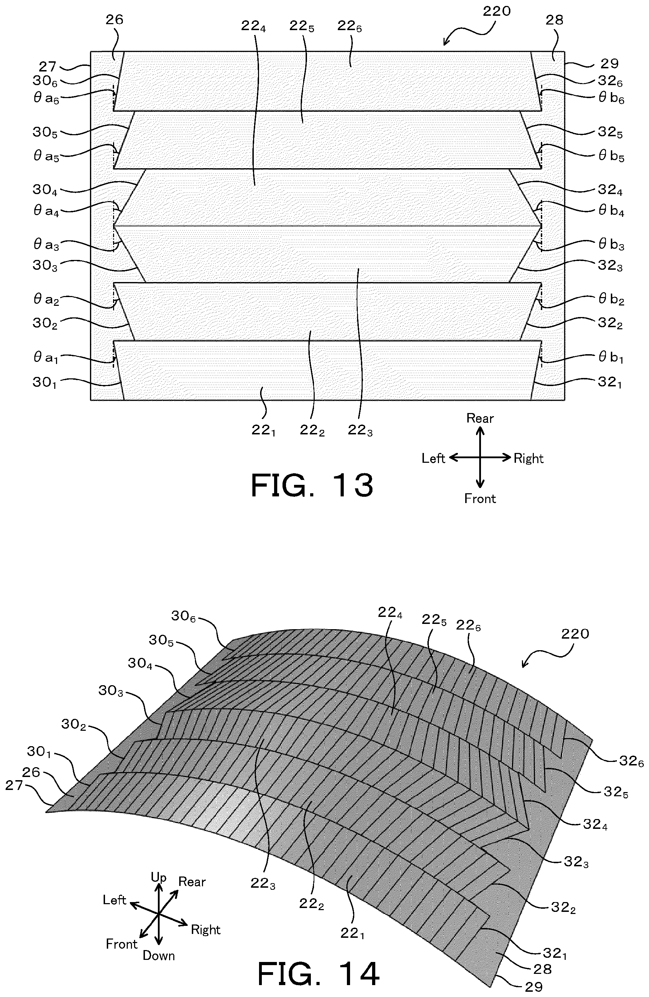

Fig. 13 is a top view of a structure 220 according to another modification. The left-right direction, front-back direction, and up-down direction of the structure 220 are as shown in Fig. 13. Of course, the orientation of the arrangement of the structure 220 is not limited to this configuration. As shown in Fig. 13, the structure 220 differs from the structure 20 in that, for the first and second connecting sections 30[i] and 32[i] (i: 1 to 6), for "i" from 1 to 3, the first and second connecting sections 30[i] and 32[i] approach the first and second pivot axes 27 and 29 as they extend from the front side to the rear side and the angles θa[i] and θb[i] gradually decrease as "i" increases. Meanwhile, for "i" from 4 to 6, the first and second connecting sections 30[i] and 32[i] move away from the first and second pivot axes 27 and 29 as they extend from the front side to the rear side and the angles θa[i] and θb[i] gradually increase as "i" increases.

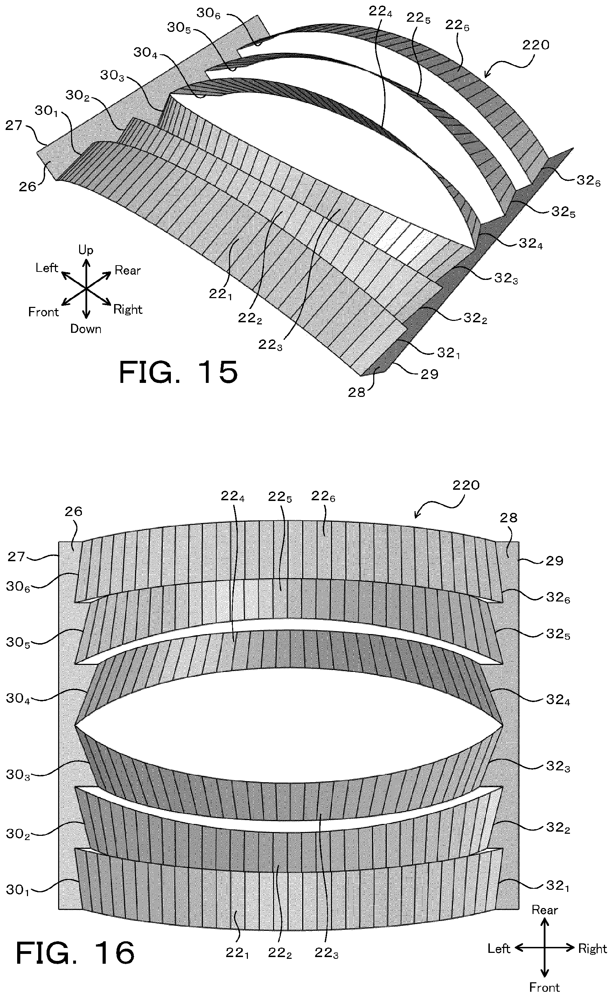

The following describes the pre-deformation process of the structure 220 and the change process in the gap (open area) between two adjacent fin sections 22. Fig. 14 is a perspective view of the structure 220 in its use base shape, while Figs. 15 and 16 are perspective and top views of the structure 220 when the fin sections 22 of the structure 220 undergo elastic deformation from the use base shape. In Figs. 14 to 16, ridge lines are shown for clarity.

In the pre-deformation process, the structure 220 is deformed from its completed manufacturing shape (the state shown in Fig. 13) to the use base shape (the state shown in Fig. 14). Here, the completed manufacturing shape and the use base shape of structure 220 are similar to the completed manufacturing shape (the states shown in Figs. 1 and 2) and the use base shape (the states shown in Figs. 3 and 4) of the structure 20.

For the structure 220, when the first and second support sections 26 and 28 are rotated around the first and second pivot axes 27 and 29 in a clockwise and counterclockwise direction from the front side of Fig. 14, starting from the use base shape, the first and second connecting sections 30[1] to 30[6] and 32[1] to 32[6] undergo bending deformation, forming a valley fold when viewed from above. In the structure 220, for the first and second connecting sections 30[i] and 32[i] (i: 1 to 6), for "i" from 1 to 3, the distance between the first and second pivot axes 27 and 29 and the first and second connecting sections 30[i] and 32[i] is longer at the front side compared to the rear side, while for "i" from 4 to 6, this distance is longer at the rear side compared to the front side. Therefore, when the first and second connecting sections 30[1] to 30[6] and 32[1] to 32[6] undergo bending deformation, as shown in Figs. 15 and 16, the fin sections 22[1] to 22[3] tilt toward the front side, while the fin sections 22[4] to 22[6] tilt toward the rear side. Additionally, in the structure 220, for "i" from 1 to 3, the angles θa[i] and θb[i] gradually decrease as "i" decreases, while for "i" from 4 to 6, the angles θa[i] and θb[i] gradually increase as "i" increases. Therefore, when the first and second support sections 26 and 28 are rotated by a certain amount, for "i" from 1 to 3, the degree to which the fin sections 22[i] tilt toward the front side decreases as "i" decreases, while for "i" from 4 to 6, the degree to which the fin sections 22[i] tilt toward the rear side decreases as "i" increases. As a result, the gap (open area) between two adjacent fin sections 22 is largest between the fin sections 22[3] and 22[4], and gradually decreases in the following order: between the fin sections 22[2] and 22[3], and between the fin sections 22[1] and 22[2]. Similarly, the gaps between the fin sections 22[4] and 22[5], and between the fin sections 22[5] and 22[6] also gradually decrease. That is, in the structure 220, when the first and second support sections 26 and 28 are rotated by a certain amount, the gap (open area) between two adjacent fin sections 22 can be made different from each other, such that the gaps between the fin sections 22[1] and 22[2], 22[2] and 22[3], and 22[3] and 22[4] differ, and similarly, the gaps between the fin sections 22[3] and 22[4], 22[4] and 22[5], and 22[5] and 22[6] also differ.

In the structure 220 according to the modification, the first and second connecting sections 30[i] and 32[i] (i: 1 to 6) are formed such that, for "i" from 1 to 3, the angles θa[i] and θb[i] gradually decrease as "i" decreases, while for "i" from 4 to 6, the angles θa[i] and θb[i] gradually increase as "i" increases. However, this is not limited to the above, and they may be formed such that the angles θa[i] and θb[i] are the same for at least two consecutive values of "i". For example, for "i" from 1 to 3, they may be formed such that the angles θa[i] and θb[i] are the same, and similarly, they may also be formed such that the angles θa[i] and θb[i] are the same for "i" from 4 to 6.

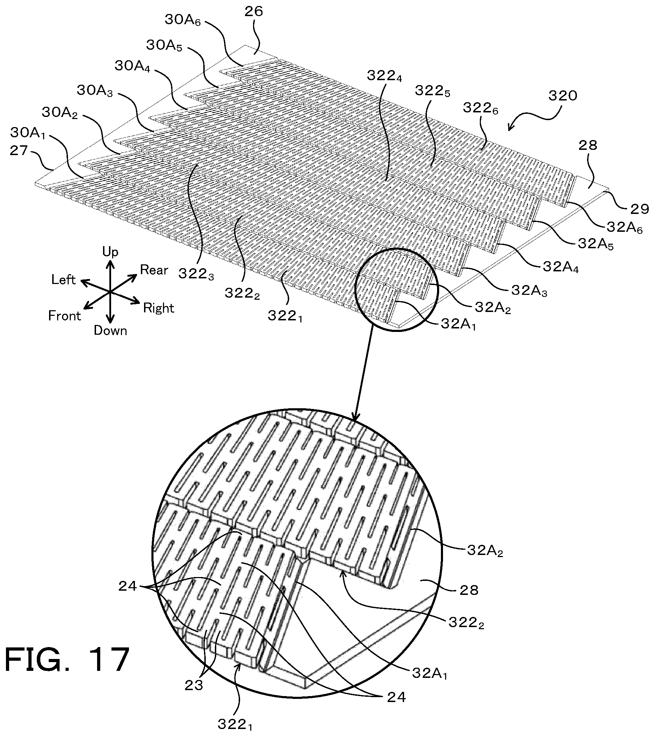

In the structures 20,120, and 220 according to the embodiment and modifications, the fin sections 22[1] to 22[6] are formed in a solid trapezoidal plate shape. However, this is not intended to be limiting. Fig. 17 is a perspective view of a structure 320 according to yet another modification. The left-right direction, front-rear direction, and up-down direction of the structure 320 are as shown in Fig. 17. Of course, the orientation of the arrangement of the structure 320 is not limited to this configuration.

As shown in Fig. 17, the structure 320 differs from the structure 20A in that the fin sections 22[1] to 22[6] are replaced with fin sections 322[1] to 322[6]. Each of the fin sections 322 includes multiple beam sections 23 and multiple bridging sections 24. The multiple beam sections 23 each extend substantially along the front-rear direction, and are spaced apart in the left-right direction between them. The multiple bridging sections 24 each extend along the left-right direction and connect one of the following: the first connecting section 30 to the beam section 23, two adjacent beam sections 23, or the beam section 23 to the second connecting section 32.

Specifically, each of the multiple beam sections 23 is connected at third positions in the extending direction of the beam section 23, via the bridging sections 24, to the first connecting section 30 or to the adjacent beam section 23 on the left side (the side of the first connecting section 30). Additionally, each of the multiple beam sections 23 is connected at fourth positions, which differs from the third positions in the extending direction of the beam section 23, via the bridging sections 24, to the second connecting section 32 or to the adjacent beam section 23 on the right side (the side of the second connecting section 32). In the example shown in Fig. 17, the third positions correspond to one of either three or two locations. The three locations are the front end, the rear end, and the center in the extending direction of the beam sections 23. The two locations are the front-side intermediate (between the front end and the center), and the rear-side intermediate (between the rear end and the center) in the extending direction of the beam sections 33. The fourth positions correspond to the other of these three or two locations.

In the structure 320, by forming the fin sections 322[1] to 322[6] in this way, the structure 320 can be made lighter and elastic deformation can be facilitated compared to the structure 20. Alternatively, each of the fin sections 322 may be formed such that, instead of the shape shown in Fig. 17, which includes the beam sections 23 and the bridging sections 24, a plate-shaped section is combined with the upper and/or lower surfaces of the shape shown in Fig. 17, resulting in the entire structure being formed as a plate shape. The thickness of the plate-shaped section is preferably no greater than about 1/5, 1/8, or 1/10 of the thickness of the entire structure 320, for example.

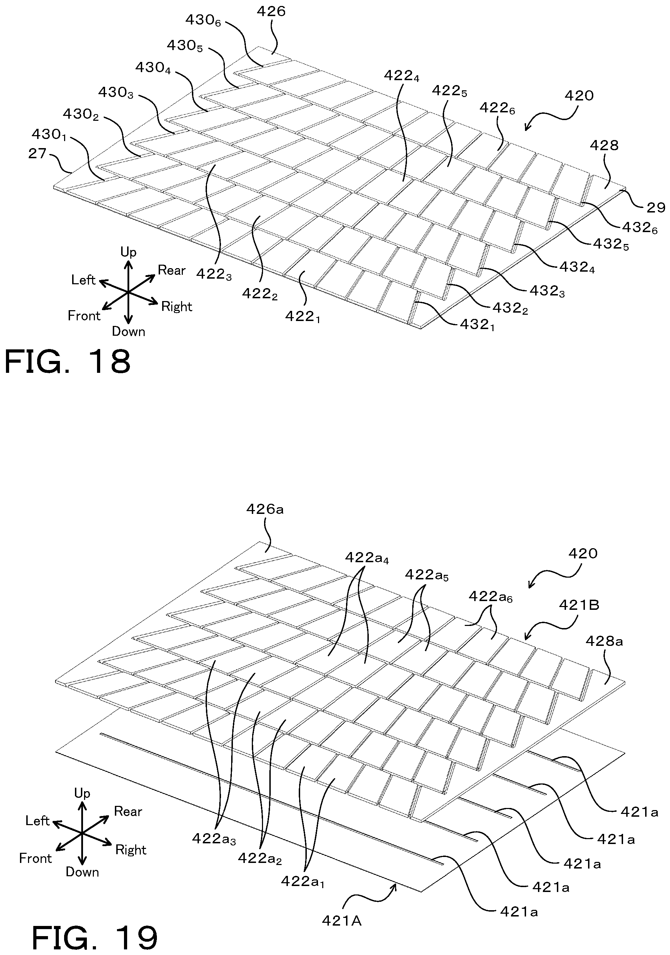

In the structures 20, 120, 220, and 320 according to the embodiment and modifications, these structures are integrally molded products formed by single-color molding. However, this is not limiting, and they may be integrally molded products formed using methods such as two-color molding or insert molding. Fig. 18 is a perspective view of a structure 420 according to yet another modification, and Fig. 19 is a diagram showing the two-color molding process for the structure 420. The left-right, front-rear, and up-down directions of the structure 420 are as shown in Figs. 18 and 19. Of course, the orientation of the arrangement of the structure 420 is not limited to this configuration.

As shown in Figs. 18 and 19, the structure 420 is an integrally molded product formed by two-color molding of a plate-shaped section 421A and an element group 421B, both having a plate shape. For example, the plate section 421A is made of resin or similar materials, while the element group 421B is made of metal or similar materials.

The plate-shaped section 421A is rectangular when viewed from above. The plate-shaped section 421A includes five holes 421a, which pass through in the up-down direction and extend along the up-down direction, with intervals in the front-rear direction. The element group 421B includes a plurality of fin elements 422a[1] to 422a[6], and first and second support elements 426a and 428a. The fin elements 422a[1] are each trapezoidal when viewed from above and are spaced apart in the left-right direction. The same arrangement applies to the fin elements 422a[2] to 422a[6]. The first and second support elements 426a and 428a are identical in shape to the first and second support sections 426 and 428 in the structure 420 when viewed from above.

In the structure 420, which is integrally molded by two-color molding, the fin section 422[1] is formed by the plate-shaped section 421A and the plurality of fin elements 422a[1]. Similarly, the fin sections 422[2] to 422[6] are each formed by the plate-shaped section 421A and their respective plurality of fin elements 422a[2] to 422a[6]. The gap between adjacent fin sections 422 in the front-rear direction is formed by the gap between each hole 421a of the plate-shaped section 421A and the gap between adjacent fin elements 422a in the front-rear direction. The first and second support sections 426 and 428 are each formed by the plate-shaped section 421A and the first and second support elements 426a and 428a. The first connecting section 430[1] is formed by the right end surface of the first support element 426a, the left end surface of the leftmost fin element 422a[1] of the plurality of fin elements 422a[1], and the upper surface of the plate-shaped section 421A. The same construction applies to the first connecting sections 430[2] to 430[6]. Similarly, the second connecting section 432[1] is formed by the left end surface of the second support element 428a, the right end surface of the rightmost fin element 422a[1] of the plurality of fin elements 422a[1], and the upper surface of the plate-shaped section 421A. The same construction applies to the second connecting sections 432[2] to 432[6].

The structure 420 in the modification is an integrally molded product formed by two-color molding. However, it may be an integrally molded product formed using alternative methods, such as insert molding.

In the structure 20 according to the embodiment, the first and second rotating shafts 27 and 29 extend in parallel to each other along the front-rear direction, with a spacing between them in the left-right direction. However, as long as the first and second rotating shafts 27 and 29 are spaced apart, they do not necessarily need to be parallel to each other. The same applies to the structures 120, 220, 320, and 420.

In the structure 20 according to the embodiment, the front and rear ends of the fin sections 22[1] to 22[6] extend in a straight line along the left-right direction. However, the front and rear ends of the fin sections 22[1] to 22[6] may alternatively extend in a curved shape along the left-right direction. The same applies to the structures 120, 220, 320, and 420.

In the embodiment, the structure 20 includes the six fin sections 22. However, the number of fin sections 22 in the structure 20 is not limited to six; any number of two or more fin sections is acceptable. The same applies to the structures 120, 220, 320, and 420.

In the embodiment, the structure 20 is an integrally molded product. However, it may be formed as multiple components that are joined together to form the structure. The same applies to the structures 120, 220, 320, and 420."

In the embodiment, the structure 20 is initially formed in a plate shape (see Figs. 1 and 2) and is then deformed into the use base shape (see Figs. 3 and 4), curving upward relative to the predetermined plane that includes the first and second pivot axes 27 and 29, before use. However, the structure 20 may be directly formed into the use base shape. The same applies to the structures 120, 220, 320, and 420.

The following describes the correspondence relationship between the primary elements of the above embodiment and the primary elements of the present disclosure described in the Summary. In the embodiment, the fin sections 22[1] to 22[6] correspond to the "multiple fin sections", the first support section 26 corresponds to the "first support section", the second support section 28 corresponds to the "second support section", the first connecting sections 30[1] to 30[6] correspond to the "multiple first connecting sections", and the second connecting sections 32[1] to 32[6] correspond to the "multiple second connecting sections".

The correspondence relationship between the primary components of the embodiment and the primary components of the disclosure, regarding which the problem is described in the Summary, should not be considered to limit the components of the disclosure, regarding which the problem is described in the Summary, since the embodiment is only illustrative to specifically describes the aspects of the disclosure, regarding which the problem is described in the Summary. In other words, the disclosure, regarding which the problem is described in the Summary, should be interpreted on the basis of the description in the Summary, and the embodiment is only a specific example of the disclosure, regarding which the problem is described in the Summary.

The aspect of the disclosure is described above with reference to the embodiment. The disclosure is, however, not limited to the above embodiment but various modifications and variations may be made to the embodiment without departing from the scope of the disclosure.

### [note]

[1] A structure according to the present disclosure is a structure including multiple fin sections arranged in a predetermined direction, and is configured to be capable of changing a gap between two adjacent fin sections. Each of the multiple fin sections is formed in a band shape and is elastically deformable. The structure further includes a first support section rotatable around a first pivot axis, a second support section rotatable around a second pivot axis, multiple first connecting sections, each connecting the first support section to one end of the multiple fin sections, and each being bendably deformable, and multiple second connecting sections, each connecting the second support section to the other end of the multiple fin sections, and each being bendably deformable. The first and second connecting sections, which are pairs with respect to the fin sections, are formed such that they move away from the first and second pivot axes, respectively as they extend from one side to the other side in the predetermined direction. When the first and second support sections rotate in predetermined opposite directions around the first and second pivot axes, respectively, starting from a use base shape in which the multiple fin sections are curved on one side relative to a predetermined plane that includes the first and second pivot axes, the multiple first and second connecting sections bend toward a direction where the first and second support sections and the multiple fin sections approach each other, causing out-of-plane deformation due to elastic deformation in the multiple fin sections, leading the multiple fin sections to tilt toward the other side in the predetermined direction, thereby increasing the gap between the two adjacent fin sections.
   In the structure according to the present disclosure, when the first and second support sections rotate in the predetermined opposite directions around the first and second pivot axes, starting from the use base shape in which the multiple fin sections are curved on one side relative to the predetermined plane that includes the first and second pivot axes, the multiple first and second connecting sections bend toward the direction where the first and second support sections and the multiple fin sections approach each other. Since the distance between the first and second pivot axes and the pair of first and second connecting sections, relative to the fin sections, is longer on the other side than on one side in the predetermined direction, when each pair of the first and second connecting sections bends, it causes out-of-plane deformation due to elastic deformation in each of the fin sections, leading the multiple fin sections to tilt toward the other side in the predetermined direction. The one side and the other side in the predetermined direction may be the same for all of the fin sections (for example, the same for the front and rear sides of all of the fin sections), or they may be different between some of the fin sections and the remaining fin sections (for example, the front and rear sides for some of the fin sections, and the rear and front sides for the remaining fin sections). When the multiple fin sections tilt toward the other side in the predetermined direction, the gap between two adjacent fin sections (the opening area) increases. That is, by rotating the first and second support sections from the use base shape, the gap (opening area) between two adjacent fin sections can be changed. Additionally, since the first and second support sections and the multiple fin sections are connected via multiple first and second connecting sections, the structure allows for a simpler configuration, specifically making it easy to reduce the number of parts and eliminate complicated assembly, thereby enabling changes in the gap (opening area) between two adjacent fin sections. The rotation of the first and second support sections may be performed either manually or automatically (driven by a power source).
[2] In the structure described above (the structure described in [1]), at least two of the first and second connecting sections, which are continuously arranged in pairs in the predetermined direction, may be formed such that the angle between the extending directions of the first and second pivot axes and the extending directions of the first and second connecting sections is constant.
[3] In the structure described above (the structure described in [1] or [2]), at least three of the first and second connecting sections, which are continuously arranged in pairs in the predetermined direction, may be formed such that the angle between the extending directions of the first and second pivot axes and the extending directions of the first and second connecting sections gradually changes.
[4] In the structure described above (the structure described in any one of [1] to [3]), the pairs of the first and second connecting sections with respect to the fin sections may be each formed as recesses extending such that they move away from the first and second pivot axes as they extend from one side to the other side in the predetermined direction.
[5] In the structure described above (the structure described in any one of [1] to [3]), the pairs of the first and second connecting sections with respect to the fin sections each may include at least one beam section and multiple cross members, the at least one beam section may extend such that it moves away from the first and second pivot axes as it extends from one side to the other side in the predetermined direction, the at least one beam section may be connected to the first or second support section or to the adjacent beam section on the first or second support section side via the cross member at one or more first positions in an extending direction of the beam section, and the at least one beam section may be connected to the fin sections or to the adjacent beam section on the fin sections side via the cross member at one or more second positions, which differs from the one or more first positions, in the extending direction of the beam section.
[6] In the structure described above (the structure described in any one of [1] to [5]), the structure may be an integrally molded product. Such a configuration allows for a more effective reduction in the number of parts and the elimination of complicated assembly steps. Here, "integrally molded product" includes not only components molded as a single piece through mono-color molding but also components molded as a single piece through two-color molding, insert molding, and other similar methods.
[7] In the structure described above (the structure described in any one of [1] to [6]), the structure may be formed in a plate shape and is deformed into the use base shape.
[8] In the structure described above (the structure described in any one of [1] to [6]), the structure may be formed in the use base shape.

## Claims

1. A structure comprising multiple fin sections arranged in a predetermined direction, and capable of changing a gap between two adjacent fin sections,
wherein each of the multiple fin sections is formed in a band shape and is elastically deformable,
the structure further comprising:
a first support section rotatable around a first pivot axis;
a second support section rotatable around a second pivot axis;
multiple first connecting sections, each connecting the first support section to one end of the multiple fin sections, and each being bendably deformable; and
multiple second connecting sections, each connecting the second support section to the other end of the multiple fin sections, and each being bendably deformable,
wherein the first and second connecting sections, which are pairs with respect to the fin sections, are formed such that they move away from the first and second pivot axes, respectively as they extend from one side to the other side in the predetermined direction, and
wherein, when the first and second support sections rotate in predetermined opposite directions around the first and second pivot axes, respectively, starting from a use base shape in which the multiple fin sections are curved on one side relative to a predetermined plane including the first and second pivot axes, the multiple first and second connecting sections bend toward a direction where the first and second support sections and the multiple fin sections approach each other, causing out-of-plane deformation due to elastic deformation in the multiple fin sections, leading the multiple fin sections to tilt toward the other side in the predetermined direction, thereby increasing the gap between the two adjacent fin sections.

2. The structure according to Claim 1,
wherein at least two of the first and second connecting sections, which are continuously arranged in pairs in the predetermined direction, are formed such that the angle between the extending directions of the first and second pivot axes and the extending directions of the first and second connecting sections is constant.

3. The structure according to Claim 1,
wherein at least three of the first and second connecting sections, which are continuously arranged in pairs in the predetermined direction, are formed such that the angle between the extending directions of the first and second pivot axes and the extending directions of the first and second connecting sections gradually changes.

4. The structure according to Claim 1,
wherein the pairs of the first and second connecting sections with respect to the fin sections are each formed as recesses extending such that they move away from the first and second pivot axes as they extend from one side to the other side in the predetermined direction.

5. The structure according to Claim 1,
wherein the pairs of the first and second connecting sections with respect to the fin sections each include at least one beam section and multiple cross members,
the at least one beam section extends such that it moves away from the first and second pivot axes as it extends from one side to the other side in the predetermined direction,
the at least one beam section is connected to the first or second support section or to the adjacent beam section on the first or second support section side via the cross member at one or more first positions in an extending direction of the beam section, and
the at least one beam section is connected to the fin sections or to the adjacent beam section on the fin sections side via the cross member at one or more second positions, which differs from the one or more first positions, in the extending direction of the beam section.

6. The structure according to Claim 1,
wherein the structure is an integrally molded product.

7. The structure according to Claim 1,
wherein the structure is formed in a plate shape and is deformed into the use base shape.

8. The structure according to Claim 1,
wherein the structure is formed in the use base shape.
